# EUROPÄISCHE PATENTSCHRIFT

(11) **EP 0 538 742 B1**
(45) Veröffentlichungstag und Bekanntmachung des Hinweises auf die Patenterteilung: **19.07.1995**
(21) Anmeldenummer: 92117671.5
(22) Anmeldetag: 16.10.1992
(51) Int. Cl.: B65G 1/04, B65G 1/127

(54) **Speicher für Warenstücke**
Storage for goods pieces
Entrepôt pour pièces de marchandises

(30) Priorität: 25.10.1991 DE 4135241
(43) Veröffentlichungstag der Anmeldung: 28.04.1993
(73) Patentinhaber: Klöckner Hänsel GmbH, 30024 Hannover (DE); Hamberger, Werner, Dipl. Ing., D-71701 Schwieberdingen (DE)
(72) Erfinder: Hogenkamp, Wilhelm, D-30161 Hannover (DE); Hamberger, Werner, D-71701 Schwieberdingen (DE)
(74) Vertreter: Rehberg, Elmar, Dipl.-Ing.

(56) Entgegenhaltungen:
- DE-A- 2 800 570
- DE-B- 1 708 885
- US-A- 4 170 285

## Beschreibung

Die Erfindung bezieht sich auf einen Speicher für Warenstücke, insbesondere reihenweise geförderte - Süßwarenstücke, mit einer Eingabestation und einer Ausgabestation, die unabhängig voneinander betätigbar sind, mit einer Zwischen Eingabestation und Ausgabestation angeordneten Speicherstrecke mit variabler Aufnahmekapazität und mit Trägerplatten zur Aufnahme der Warenstücke und einer Fördereinrichtung zum Transportieren der Trägerplatten in etwa kreisartiger Bewegung durch den Speicher. Bei der Herstellung und Verpackung von insbesondere Süßwarenstücken, beispielsweise Schokoladetafeln oder -riegeln entsteht das Problem, daß die Herstellmaschine aus produktionstechnischen Gründen kontinuierlich durchlaufend betrieben wird, während die Verpackungsmaschine oder -anlage zur Überbrückung von Zwischenzeiten stillgesetzt wird. Solche Zwischenzeiten können durch Arbeitspausen für das Bedienungspersonal der Verpackungsanlage vorgegeben sein oder auch durch einen Defekt, z. B. Rollenwechsel, an einer oder mehreren Verpackungsmaschinen einer Verpackungsanlage verursacht sein. In all diesen Zwischenzeiten müssen die von der Herstellungsmaschine weiter angelieferten Warenstücke in einen Speicher überführt werde. Außerhalb der Zwischenzeiten soll dann der Speicher auch wieder entleert werden können, indem die unverpackten Warenstücke der Verpackungsanlage zugeführt werden.

Ein Speicher der eingangs beschriebenen Art ist aus der US-A-4 168 776 bekannt. Wesentliches Element dieses Speichers ist eine Endloskette, die über Kettenräder geschlungen ist. Ein Teil der Kettenräder ist ortsfest angeordnet, während andere Kettenräder, paarweise zusammengefaßt, vertikal beweglich angeordnet sind. An dem Speicher ist eine Eingabestation und eine davon separate Ausgabestation gebildet, die auch unabhängig voneinander betätigbar sind, d. h. der Speicher kann je nach Bedarf befüllt und entleert werden. Der Speicher kann also entweder nur befüllt oder nur entleert werden. Weiterhin ist es möglich, während des Befüllens auch zu entleeren, wobei auch durchaus unterschiedliche Geschwindigkeiten angewendet werden können. Der bekannte Speicher besitzt einen relativ großen Totraum, d. h. etwa 50 % seines Volumens dienen nur der reinen Durchförderung der Warenstücke durch den Speicher. Bevor das erste Warenstück in der Abgabestation wieder entnommen werden kann, muß der Speicher etwa bis zur Hälfte seines Raumbedarfs befüllt werden. Nur die restliche Hälfte seines Raumbedarfs bildet eine Speicherstrecke mit variabler Aufnahmekapazität. Wenn es zu den wesentlichen Eigenschaften eines Speichers gerechnet wird, daß auch seine Entnahmemöglichkeit jederzeit gegeben sein soll bzw. in relativ kurzer Zeit herstellbar sein soll, dann ist das Verhältnis von Speicherstrecke mit variabler Aufnahmekapazität zum Verhältnis des nur zur Förderung dienenden Totraums relativ ungünstig. Hierdurch wiederum verursacht baut ein solcher Speicher relativ lang und hoch, wenn seine Speicherstrecke mit variabler Aufnahmekapazität hinreichend groß sein soll oder sein muß. Die endlose Kette ist mit Trägerplatten zur Aufnahme der Warenstücke versehen und es ist eine Fördereinrichtung zum Transportieren der Trägerplatten an der Kette in etwa kreisartiger Bewegung durch den Speicher vorgesehen, wobei die einzelnen Antriebsräder Bestandteil dieser Fördereinrichtung sind. Durch die kreisbogenartige Umlenkung der Endloskette an den Kettenrädern und das schrittweise bzw. taktweise Weiterschalten der Kette an den verschiedenen Stellen ergeben sich an den Umlenkstellen auf die Warenstücke einwirkende Kräfte, die parallel zur Haupterstreckungsebene der Trägerplatten gerichtet sind. Damit die Warenstücke von den Trägerplatten nicht herabrutschen und herunterfallen, müssen die Trägerplatten entweder eine entsprechende Formgebung aufweisen oder es müssen sonstige Maßnahmen getroffen sein.

Es versteht sich, daß die im Speicher an den Kettenrädern aufgebrachten Umfangsgeschwindigkeiten begrenzt sind. Dadurch ist auch die Leistung eines solchen Speichers begrenzt.

Nach dem gleichen Prinzip arbeitende Speicher sind weiterhin aus der DE-C-31 48 473, der DE-AS-17 56 268 oder auch aus der DE-AS-25 02 386 bekannt. Die Vorteile dieser Speicher sind darin zu sehen, daß die Eingabestation und die Ausgabestation unabhängig voneinander betätigbar sind. Weiterhin weisen diese Speicher die Besonderheit auf, daß die Warenstücke in der Reihenfolge ihrer Einspeicherung auch wieder entnommen werden können, d. h. das zuerst in den Speicher eingebrachte Warenstück wird auch zuerst wieder entnommen.

Für das Anwendungsgebiet der Speicherung von Süßwarenstücken, insbesondere Schokoladetafeln -oder riegeln ist es bekannt, aufbauend auf der zuvor beschriebenen prinzipiellen Anordnung des Speichers Gondeln zu verwenden, die gelenkig mit der Endloskette verbunden sind. Diese Gondeln weisen übereinander eine gewisse Anzahl von Trägerplatten auf, beispielsweise fünf Trägerplatten, wobei jede Trägerplatte zur Aufnahme einer Reihe von Süßwarenstücken ausgebildet und bestimmt ist. Die Teilung, mit der die Trägerplatten innerhalb einer Gondel angeordnet sind, ist dabei kleiner als der Abstand der untersten Trägerplatten einer ersten Gondel von der obersten Trägerplatte einer nachfolgenden Gondel. Dieser dort größere Unterschied wird als Gondelsprung bezeichnet. Andererseits gestatten es jedoch die Gondeln in einfacher Weise, die Umlenkung der Trägerplatten um die Kettenräder zu ermöglichen, wobei die Trägerplatten immer in horizontal ausgerichteter Position verbleiben. Da nackte, unverpackte Süßwarenstücke auf eben ausgebildete Trägerplatten aufgeschoben werden, ist eine abweichende Formgebung der Trägerplatten nicht möglich. Durch die gelenkige Aufhängung der Gondeln wird einerseits die Umlenkung um die Kettenplatten möglich und andererseits wird der negative Einfluß der Beschleunigungskräfte beim Weiterschalten der Endloskette gemindert. Nachteilig an solchen Gondeln ist es, daß die Weiterschaltschritte der Endloskette z. B. im Bereich der Eingabestation unterschiedlich groß bemessen sein müssen. Die größere Strecke entspricht dabei dem Gondelsprung und dieser Gondelsprung legt damit die Leistung des Speichers fest, weil dieser Bewegungsschritt die größte Beanspruchung für die Süßwarenstücke darstellt. Dabei darf kein Süßwarenstück von seiner Tragplatte an der Gondel herabfallen. Zur Überbrückung der Teilung zwischen den Tragplatten einer Gondel steht dann eine gleichgroße Zeitspanne wie bei der Überwindung des Gondelsprungs bereit, so daß hier eine vergleichsweise niedrigere Geschwindigkeit angewendet werden kann.

Nachteilig an solchen mit Gondeln ausgerüsteten Speichern ist weiterhin, daß durch die Art der Umlenkung der Speicher sehr groß baut, obwohl seine Speicherstrecke mit variabler Aufnahmekapazität relativ klein ist. Das Aufschieben der Süßwarenstücke auf die Trägerplatten im Bereich der Eingabestation und das Abschieben von den Trägerplatten im Bereich der Abgabestation beansprucht die Süßwarenstücke entsprechend, da hier Gleitreibung zu überwinden ist. Der Einschiebevorgang muß im übrigen so ausgeführt werden, daß das Süßwarenstück symmetrisch zum Gelenkpunkt der Gondel bzw. einer Vertikalebene durch diesen Gelenkpunkt erfolgt. Dies bedeutet, daß bei wechselnden Formaten von Süßwarenstücken beim Einschieben unterschiedliche Wege zurückgelegt werden müssen und/oder für die jeweiligen Anwendungsfälle in Format und Ausbildung abgestimmte Tragplatten und Gondeln an solchen Speicher Verwendung finden.

Ein weiterer Nachteil besteht darin, daß sämtliche Gondeln des Speichers bei gewissen Betriebszuständen bewegt werden müssen. Dies ist z. B. dann der Fall, wenn ein vollkommen leerer Speicher hinsichtlich seines Totraums, also hinsichtlich seiner Speicherstrecke mit konstanter Aufnahmekapazität, befüllt wird.

Weiterhin ist es nachteilig, daß sich bei den bekannten Speichern die an den Gondeln befestigten Trägerplatten nur schwierig reinigen lassen. Während der laufenden Produktion ist dies praktisch überhaupt nicht möglich. Nur, wenn der Speicher und die angeschlossenen Anlagen stillgesetzt werden, ist eine mühsame Reinigung bis zu gewissem Grad möglich.

Der Erfindung liegt die Aufgabe zugrunde, einen Speicher der eingangs beschriebenen Art bereitzustellen, der die wesentlichen Vorteile der Bauweise mit Gondeln aufweist, ohne zugleich deren Nachteile zu besitzen. Es kommt also insbesondere darauf an, die zuerst in den Speicher eingespeicherten Warenstücke, jedenfalls in einer stapelweisen Betrachtung, auch zuerst aus dem Speicher wieder entnehmen zu können, und zwar unabhängig voneinander zu beliebigen Zeitpunkten sowie eine variable Speicherkapazität zur Verfügung zu stellen. Der Speicher soll eine höhere Leistung aufweisen, schnell ausgabebereit sein, ein kleineres Bauvolumen besitzen und die Möglichkeiten zu einer Standardisierung bis hin zu einem Universalspeicher, eröffnen.

Erfindungsgemäß wird dies bei dem Speicher der eingangs beschriebenen Art dadurch erreicht, daß die Trägerplatten im Speicher frei beweglich vorgesehen sind, daß im Bereich der Eingabestation ein Eingabeelevator und im Bereich der Ausgabestation ein Ausgabeelevator zum Bilden bzw. Abarbeiten von Vollstapeln von mit Warenstücken besetzten Trägerplatten vorgesehen sind, daß die Speicherstrecke zwischen Eingabeelevator und Ausgabeelevator zum gemeinsamen Fördern der Vollstapel unter Staubildung vor dem der Ausgabestation zugeordneten Ausgabeelevator ausgebildet ist, daß zwischen dem Eingabeelevator und der Speicherstrecke ein Eingabeförderer und zwischen der Speicherstrecke und dem Ausgabeelevator ein Ausgabeförderer für Vollstapel vorgesehen sind, und daß separate Antriebe für den Eingabeelevator, den Ausgabeelevator und die Speicherstrecke vorgesehen sind.

Die Trägerplatten sind nicht mehr unlösbar mit der Kette oder den Gondeln verbunden, sondern die Trägeplatten sind als frei bewegliche Teile vorgesehen, die als solche im Speicher mit dem jeweiligen Teil der Fördereinrichtung gehandhabt werden. Die Trägerplatten bestehen aus ebenen Platten, insbesondere Blechen entsprechender Abmessungen. Die eingesetzten Elevatoren dienen dazu, die Trägerplatten mit den darauf befindlichen Warenstücken zu einem Vollstapel aufzurichten bzw. einen solchen Vollstapel abzuarbeiten. Wenn man die Vollstapel als kleinste Einheit betrachtet, wird dabei der Vorteil, ähnlich wie auf den Gondeln, erreicht, daß die Warenstücke die den Zuerst gebildeten Vollstapel ausmachen, auch als erste aus dem Speicher wieder entnommen werden können. Diese Vollstapel werden dann von einem Eingabeförderer aus dem Bereich des Eingabeelevators in den Bereich der Speicherstrecke überführt. Im Bereich der Speicherstrecke werden nur noch Vollstapel gehandhabt, d. h. die Bewegungen können relativ langsam verlaufen. Trotzdem ist die Ausgabebereitschaft des Speichers schnell erreicht. Die Vollstapel werden vor der Ausgabestation aufgestaut und an der Staustelle jeweils nachgeschoben, wenn der Ausgabeförderer einen Vollstapel in den Ausgabeelevator überführt hat. Die separaten Antriebe für die Elevatoren, Übergabeförderer und die Speicherstrecke werden in entsprechender Abhängigkeit voneinander geschaltet; so setzt der im Bereich des Eingabeelevators der Eingabestation vorgesehene Eingabeförderer in seiner Bewegung erst dann ein, wenn der betreffende Vollstapel auf dem Eingabeelevator komplettiert worden ist.

Der neue Speicher weist eine große Anzahl von Vorteilen auf. Sein Platzbedarf ist wesentlich geringer als der Platzbedarf für einen Speicher herkömmlicher Art. Der Speicher besitzt prinzipiell eine kürzere Baulänge und eine geringere Bauhöhe. Es bietet sich die Möglichkeit, die Eingabestation mit ihrem Eingabeelevator und dem Eingabeförderer einerseits sowie die Ausgabestation mit dem Ausgabeelevator und Ausgabeförderer andererseits als Serienteile auszubilden und die Speicherstrecke mit variabler Aufnahmekapazität lediglich in der Baulänge zu variieren, um verschiedene Aufnahmekapazitäten zu erreichen. Vorteile hinsichtlich des Platzbedarfs sind auch durch die Handhabung der Trägerplatten direkt bedingt. Im Speicher werden auf diese Art und Weise auch weniger leere Trägerplatten bewegt als im Stand der Technik. Werden Trägerplatten nicht benötigt, so können diese stillgesetzt werden. Die somit bewegten Massen sind vorteilhaft gering. Überraschend ist es, daß bei dem neuen Speicher ein hoher Anteil Trägerplatten gleichzeitig Warenstücke tragen kann. Dies bedeutet eine hohe, variable Aufnahmekapazität, die in der Größenordnung von 95 % liegt. Beim Stand der Technik werden etwa 50 % des Speichers als variable Aufnahmekapazität zur Verfügung gestellt, d. h. die Hälfte des Speichervolumens geht an sich für den angestrebten Zweck der variablen Aufnahmekapazität verloren.

Ein ganzes Bündel von Vorteilen ergibt sich dadurch, daß auf die Gondeln verzichtet wird. Es treten keine Pendelbewegungen der Gondeln auf. Die Süßwarenstücke müssen nicht mehr symmetrisch auf die Trägerplatten aufgebracht werden. Unterschiedliche Einschiebewege können ohne Weiteres genutzt werden, wie dies für unterschiedliche Warenstücke bei gleicher Eingabestation der Fall ist. Da die Umlenkung um Kettenräder weggefallen ist, wird auch der Gondelsprung vermieden.

Die Reinigung der Trägerplatten ist vergleichsweise sehr leicht möglich. Dies kann sogar während der Produktion, also während des Betriebs des Speichers, geschehen, indem die Trägerplatten durch eine Waschstation hindurchgeführt werden oder stapelweise aus dem Speicher herausgeschleust, gereinigt und wieder eingeschleust werden. Auch innerhalb des Speichers ist ein Zugriff zu den Trägerplatten möglich, indem beispielsweise eine einzelne Trägerplatte mit z. B. defekten Warenstücken aus dem Speicher herausgenommen werden kann.

Die frei bewegliche Handhabung der Trägerplatten ermöglicht auch wesentliche Vorteile im Bereich der Eingabestation einerseits und der Ausgabestation andererseits. So ist es ohne Weiteres möglich, auf ein Aufschieben der Warenstücke auf die Trägerplatten im Bereich der Eingangsstation zu verzichten und stattdessen die einzeln handhabbaren Trägerplatten über eine Bandmesserkante zu beschicken. Im Bereich der Ausgabestation ist es möglich, die Trägerplatten mit den darauf befindlichen Warenstücken seitlich aus dem Ausgabeelevator herauszuholen und z. B. mit einer Sauger- oder Greiferanlage von den Trägerplatten abzunehmen, so daß auch hier auf eine Beanspruchung der Süßwarenstücke durch Gleitreibung verzichtet wird.

Die Leistung des Speichers kann prinzipiell höher gewählt werden, da ein Gondelsprung vermieden wird. Während bisher Reihenleistungen von 30 Reihen/min im Bereich der Eingabe oder der Ausgabe möglich waren, sind jetzt Reihenleistungen in der Größenordnung von 50 Reihen/min ohne Weiteres erzielbar. Andererseits könnte natürlich auch eine langsamere Geschwindigkeit in dem neuen Speicher gewählt werden, wie es für besonders empfindliche Süßwarenprodukte manchmal sinnvoll ist. Die empfindlichen Süßwarenstücke werden ohnehin weit weniger beansprucht als in dem Speicher des Stands der Technik.

Der neue Speicher bietet weiterhin die Möglichkeit, ein Baukastensystem zu erstellen mit all den sich daraus ergebenden Vorteilen. Es ist nicht mehr erforderilch, jeden Speicher einzeln konstruktiv auszulegen, sondern es ist die Schaffung eines Universalspeichers möglich. Die Lage der Ware auf den Trägerplatten ist gleichgültig, so daß die Trägerplatten auch nicht mehr an die Ware angepaßt werden müssen. Schaukelbewegungen werden vermieden. Querbeschleunigungen treten in erheblich reduziertem Maß auf, da die Transportgeschwindigkeit der Stapel in der Speicherstrecke geringer gewählt werden kann als die Transportgeschwindigkeit für die einzelne Trägerplatte im Eingabeelevator und im Ausgabeelevator beim Takten. Durch die Vorteile des Baukastensystems und des Universalspeichers und die sich somit ergebende Standardisierung wird es möglich, solche Speicher vergleichsweise preiswert herzustellen und der gewünschten variablen Aufnahmekapazität anzupassen. Es kann sogar eine grundsätzlich einzuhaltende Speicherhöhe von etwa 3 m eingehalten werden. Eine solche Raumhöhe steht fabrikseits in der Regel zur Verfügung, so daß ein solcher Speicher an jeder Stelle eines Geschosses aufgestellt werden kann.

Die bewegten Massen sind geringer. Die Trägerplatten werden nicht mehr alle bewegt, sondern nur die, an denen eine Bewegung erforderlich ist. Durch die plattenweise Bewegung einerseits die stapelweise Bewegung andererseits wird ein Minimum erreicht.

Der neue Speicher weist einen geringen Überbrückungsspeicheranteil auf. Praktisch muß nur ein Vollstapel von mit Warenstücken besetzten Trägerplatten gebildet werden, um kurz darauf die Ausgabebereitschaft des Speichers herzustellen. Es finden nur geradlinige, getaktete Bewegungen statt im Gegensatz zu Kreisbogenbewegungen, wie sie für die Umlenkung von Gondeln typisch sind. Die Vollstapel können vergleichsweise eng nebeneinander in der Speicherstrecke gefördert werden. Ein Freiraum, wie es zur Verhinderung des Aneinanderstoßens von pendelnden Gondeln aneinander erforderlich ist, entfällt.

Die Elevatoren sind zur senkrechten Förderung der Trägerplatten und die Speicherstrecke zur horizontalen Förderung der Vollstapel ausgebildet. Die Elevatoren können relativ zur Eingabestation bzw. zur Ausgabestation nach oben taktweise ansteigend oder nach unten absenkend arbeitend ausgebildet sein. In Verbindung mit dem Anschluß an eine Herstellungsmaschine einerseits und Verpackungsmaschinen andererseits ist es sinnvoll, die Arbeitshöhe dieser Maschinen zu nutzen und die Ein- und Ausgabestation in dieser Höhe anzuordnen, wobei die Elevatoren nach oben arbeitend vorgesehen sein können. Der unter den Elevatoren und unter der Speicherstrecke befindliche Raum kann zur Rückführung der leeren Trägerplatten unter Nutzung von Leerstapeln u. dgl. benutzt werden.

Es ist eine Steuer- und Überwachungseinrichtung zum voneinander abhängigen Ansteuern der separaten Antriebe vorgesehen. So besitzt der der Eingabestation zugeordnete Eingabeelevator einen Antrieb, der taktweise immer dann in Funktion gesetzt wird, wenn an der Eingabestation Warenstücke anfallen, die in den Speicher aufgenommen werden sollen. Der Antrieb für den Eingabeförderer wird erst dann in Tätigkeit gesetzt, wenn der vorgesehene Vollstapel in der vorgesehenen Höhe, d. h. Anzahl der Trägerplatten, in dem Eingabeelevator gebildet ist. Der Antrieb für die Speicherstrecke kann kontinuierlich arbeitend eingerichtet sein oder auch nur dann angesteuert werden, wenn zuvor der Eingabeförderer einen Vollstapel von dem Eingabeelevator auf die Speicherstrecke überführt hat oder sich zwischen den Vollstapeln auf der Speicherstrecke noch Lücken befinden. Entsprechendes gilt für die Antriebe der anderen Teile des Speichers.

Zur Führung der Trägerplatten im Vollstapel können im Bereich der Speicherstrecke Gleitbahnen vorgesehen sein, auf denen die Trägerplatten einzeln abgestützt und gemeinsam stapelweise bewegbar sind. Solche Gleitbahnen sind ein konstruktiv sehr einfaches Mittel, um die Trägerplatten über Haftreibung sicher zu halten und den erforderlichen Stapeltransport zuzulassen. Wird eine relativ große variable Aufnahmekapazität gewünscht, so müssen diese Gleitbahnen lediglich relativ lang ausgebildet werden und der zugehörige Antrieb für die Vollstapel in der Speicherstrecke ist entsprechend zu verlängern. In den eingangs- und ausgangsseitig vorgesehenen Aggregaten ändert sich hierdurch nichts.

Die Anzahl der Trägerplatten im Vollstapel kann einstellbar sein. So ist es beispielsweise vorteilhaft, zu Beginn des Befüllens eines Speichers eine kleinere Anzahl von Trägerplatten zu einem Vollstapel festzulegen, damit sehr schnell die Ausgabebereitschaft des Speichers erreicht wird. Ist die Ausgabebereitschaft aber bereits erreicht, ist es vorteilhaft, die Anzahl der Trägerplatten im Vollstapel so festzulegen, daß die vorgesehene Konstruktionshöhe ausgenutzt wird.

Zwischen Ausgabestation und Eingabestation, also gleichsam im rückführenden Trum, ist eine Förder- und Speicherstrecke zum Aufbauen, Konstanthalten oder Abbauen von Leerstapeln (22) von Trägerplatten ohne Warenstücke vorgesehen. Hier werden die Trägerplatten z. B. dann, wenn eine vergleichsweise geringe variable Aufnahmekapazität ausreicht, in Stapeln stillgesetzt. Es müssen nur soviel Trägerplatten im Bereich der Eingabestation zur Verfügung gestellt werden, wie dies entsprechend den anfallenden und abzuspeichernden Warenstücken erforderlich ist.

Im Einzelnen kann die Förder- und Speicherstrecke aneinander anschließend einen Horizontalförderer und einen Zugabeförderer aufweisen, in deren Übergangsbereich ein Heber zum Bilden eines Leerstapels von Trägerplatten ohne Warenstücke vorgesehen ist, und daß eine reversierbare Fördereinrichtung für die Leerstapel vorgesehen ist. Damit ist es möglich, unter Umkehr der Bewegungsrichtung die Leerstapel abzuspeichern bzw. wieder aufzulösen, je nach dem Anfall von benötigten leeren Trägerplatten im Bereich der Eingabestation und anfallenden leeren Trägerplatten im Bereich der Ausgabestation.

Der Eingabeförderer und der Ausgabeförderer sind jeweils dem Eingabeelevator und dem Ausgabeelevator zugeordnet und als die Trägerplatten im Vollstapel hintergreifende Ein- bzw. Ausschieber ausgebildet. Es ergeben sich hier einfache konstruktive Möglichkeiten.

Die Fördereinrichtung im Bereich der Speicherstrecke kann die Trägerplatten im Vollstapel hintergreifende Mitnehmerarme aufweisen, die um vertikale Achsen in eine Mitnahmeposition bzw. Leerposition verschwenkbar sind und kontinuierlich schrittweise angetrieben sind. Auch andere konstruktive Möglichkeiten sind denkbar. So können auch Schieber benutzt werden, um die Trägerplatten im Vollstapel jeweils zu hintergreifen und schrittweise weiterzufördern, wobei ein Aufstau von dem der Ausgabestation zugeordneten Ausgabeelevator stattfindet. Die Fördereinrichtung kann eine Steuereinrichtung für die Mitnehmerarme aufweisen, die in Abhängigkeit von dem entgegengesetzt der Förderrichtung ersten Freiplatz nachfolgend sämtlich in die Mitnahmeposition überführt werden.

Die Erfindung wird anhand eines bevorzugten Ausführungsbeispiels weiter beschrieben. Es zeigen:
- Figur 1: einen Vertikalschnitt durch den Speicher während des Betriebs,
- Figur 2: einen Vertikalschnitt durch den vollkommen leeren Speicher,
- Figur 3: einen Vertikalschnitt durch den maximal gefüllten Speicher,
- Figur 4: eine eingangsseitige Ansicht des Speichers,
- Figur 5: eine Draufsicht auf den unteren Teil des Speichers im rückwärtigen Trum,
- Figur 6: eine Folge von Draufsichten auf den Speicher,
- Figur 7: die Fortsetzung der Figur 6 und
- Figur 8: einen Größenvergleich zwischen dem neuen Speicher und dem Speicher nach dem Stand der Technik.

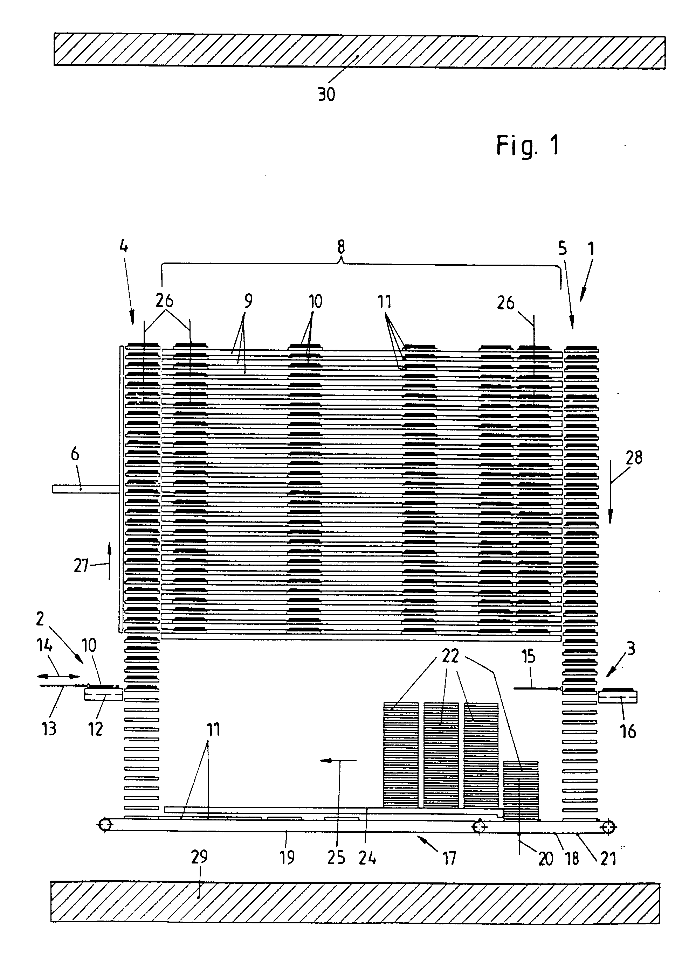

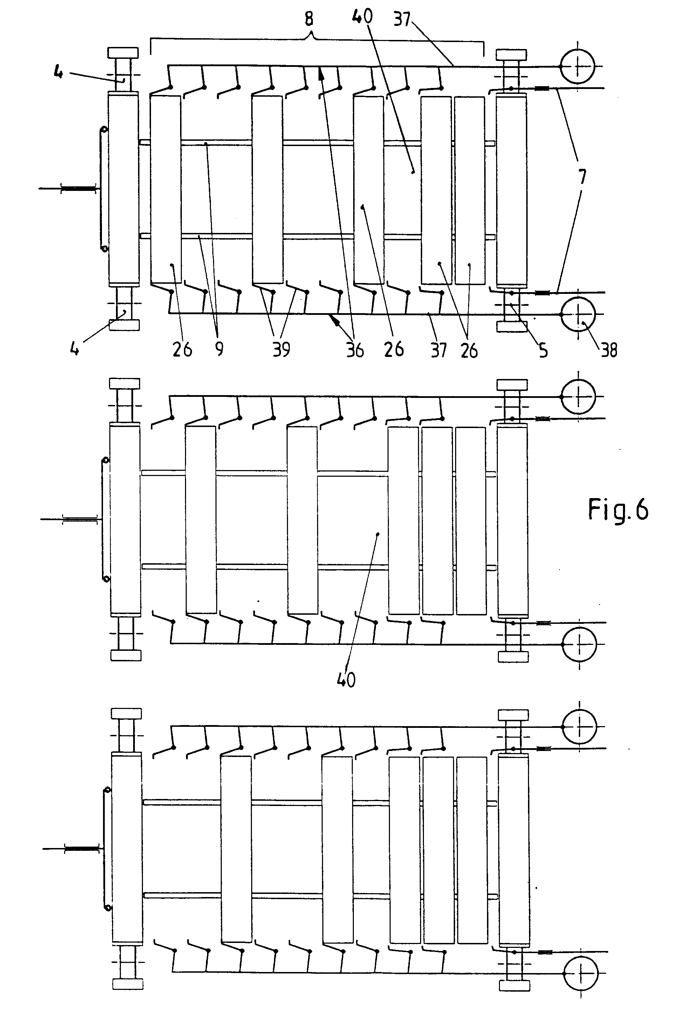

In dem vertikalen Längsschnitt durch den Speicher 1 gemäß Figur 1 sind die für die Erfindung wesentlichen Teile schematisch dargestellt. Es ist eine Eingabestation 2 und eine Ausgabestation 3 gebildet. Im Bereich der Eingabestation 2 ist ein Eingabeelevator 4 und im Bereich der Ausgabestation 3 ein Ausgabeelevator 5 angedeutet. Die Elevatoren 4 und 5 sind prinzipmäßig gleichartig ausgebildet, wobei der Eingabeelevator 4 taktweise fortschreitend nach oben arbeitet, während der Ausgabeelevator 5 taktweise nach unten schreitend arbeitet. Dem Eingabeelevator 4 ist ein Eingabeförderer 6 und dem Ausgabeelevator 5 ein Ausgabeförderer 7 (Figur 6) zugeordnet. Zwischen den beiden Elevatoren 4 und 5 befindet sich eine Speicherstrecke 8 mit variabler Aufnahmekapazität. Im Bereich der Speicherstrecke 8 sind horizontale Gleitbahnen 9 angeordnet. Der Speicher dient zur Aufnahme von Warenstücken 10, die auf frei beweglich vorgesehenen Trägerplatten 11 liegen.

Im Bereich der Eingabestation 2 ist ein Förderband 12 vorgesehen, welches parallel zur eingangsseitigen Stirnseite des Speichers 1 angeordnet ist. Auf ihm gelangen die Warenstücke 10 in getakteter Förderung aus der Herstellungsmaschine zum Eingang des Speichers. Dem Förderband 12 ist ein Eingabeschieber 13 zugeordnet, der gemäß Pfeil 14 hin- und hergehend angetrieben wird, um so die Warenstücke 10, meist reihenweise, auf die zugehörige leere Trägerplatte 11 des Eingabeelevators 4 zu schieben. Es ist erkennbar, daß die Warenstücke 10 auch im rechten Winkel dazu, also über einen Förderer, der in Richtung des Pfeils 14 angeordnet ist, eingebracht werden können. In diesem Fall kann sogar eine Bandmesserkante angewendet werden, um unter Vermeidung eines Eingabeschiebers 13 und der damit verbundenen Gleitreibung die leeren Trägerplatten 11 in einer schlaufenartigen Bewegung aus dem unteren Teil des Speichers herauszuführen und über die Bandmesserkante direkt mit den Warenstücken 10 zu beschicken.

Im Bereich der Ausgabestation 3 ist ein Ausgabeschieber 15 vorgesehen, der die Warenstücke 10 von den Trägerplatten 11 auf einen Förderer 16 schiebt, von wo aus sie der Packmaschine oder der Packanlage zugeführt werden.

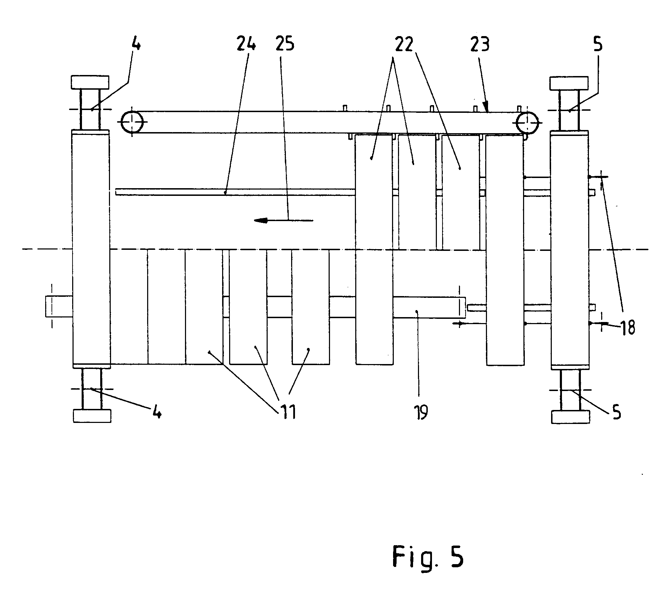

Im unteren Bereich des Speichers 1 ist das rückwärtige Trum dargestellt, welches zur Förderung und Handhabung der leeren Trägerplatten 11 dient. Es ist hier eine Förder- und Speicherstrecke 17 für die leeren Trägerplatten 11 vorgesehen. Wesentliche Bestandteile sind hintereinandergeschaltet ein Horizontalförderer 18 und ein Zugabeförderer 19. Im Bereich des Horizontalförderers 18 ist ein nur angedeuteter Heber 20 vorgesehen, mit dessen Hilfe die leeren Trägerplatten 11, die in Mitnehmer 21 des Horizontalförderers 18 eingelegt sind, nach oben von dem Band des Horizontalförderers 18 abgehoben und so stapelbildend aufgenommen werden können. Die so gebildeten Leerstapel 22 aus leeren Trägerplatten 11 können mit Hilfe einer Fördereinrichtung 23 (Figur 5) auf Gleitschienen 24 stapelweise aufgesetzt werden. Wenn der Speicher entleert wird, bilden sich die Leerstapel 22 und werden von der Fördereinrichtung 23 in Richtung eines Pfeils 25 auf die Gleitschienen 24 geschoben. Werden im Speicher mehr Warenstücke 10 aufgenommen als abgegeben, dann werden die Leerstapel 22 entgegengerichtet zum Pfeil 25 mit der Fördereinrichtung 23 bewegt und in den Kreislauf zurückgetaktet. Der Heber 20 dient nicht nur dem Herausschleusen von leeren Trägerplatten 11 bzw. dem Rückschleusen der leeren Trägerplatten 11 in den Kreislauf, sondern er ist auch so ausgebildet, daß er in der angehobenen Stellung verbleiben kann. Wenn der Eingabetakt und der Ausgabetakt am Speicher übereinstimmen, also taktweise gleich viel Warenstücke 10 eingespeichert und gleichzeitig aus dem Speicher entnommen werden, fallen am Ende der Ausgabestation 3 die Trägerplatten 11 genau in dem Takt an, in dem sie in der Eingabestation 2 wieder benötigt werden. In diesem Fall bleibt der Heber 20 angehoben und die Trägerplatten 11 werden über den Horizontalförderer 18 unter dem angehobenen Stapel 22 hindurchgefördert und gelangen so direkt auf den Zugabeförderer 19 und von dort in den Eingabeelevator 4.

Der Speicher 1 wird wie folgt betrieben: leere Trägerplatten 11 gelangen auf dem Zugabeförderer 19 in den Bereich des Eingabeelevators 4 und werden von diesem taktweise angehoben, bis eine leere Trägerplatte 11 auf der Höhe des Förderbands 12 im Bereich der Eingabestation 2 steht. Wenn nun Warenstücke 10 im Speicher 1 aufgenommen werden sollen bzw. müssen, wird der Eingabeschieber 13 gemäß Pfeil 14 betätigt und es wird eine Reihe Warenstücke 10 auf eine Trägerplatte 11 aufgeschoben. Sobald dies geschehen ist, wird der Antrieb des Eingabeelevators 4 in Tätigkeit gesetzt. Dieser schaltet einen Takt weiter, so daß die mit Warenstücken besetzte Trägerplatte 11 um eine Teilung, also den Abstand zwischen zwei benachbarten Trägerplatten 11 im Eingabeelevator 4 angehoben wird. Gleichzeitig gelangt eine leere Trägerplatte 11 auf die Höhe der Eingabestation 2, so daß sich der Einschiebevorgang wiederholt, sofern Warenstücke 10 im Speicher weiterhin aufgenommen werden sollen. Auf diese Weise wird im Eingabeelevator 4 ein Vollstapel 26 von mit Warenstücken 10 besetzten Trägerplatten 11 gebildet. Im vorliegenden Fall besteht ein vollständiger Vollstapel 26 aus dreißig mit Warenstücken 10 befüllten Trägerplatten 11 übereinander. Sobald die erste mit Warenstücken 10 beladene Trägerplatte 11 die oberste Stellung im Eingabeelevator 4 erreicht, also ein erster, vollständiger Vollstapel 26 gebildet worden ist, wird der Antrieb des Eingabeförderers 6 in Tätigkeit gesetzt. Der Übergabeförderer 6 erstreckt sich über die gesamte Höhe des Vollstapels 26 und schiebt einen solchen Vollstapel 26 aus dem Eingabeelevator 4 in den Bereich der Speicherstrecke 8, und zwar dort auf einen ersten Aufnahmeplatz unmittelbar am Beginn dieser Speicherstrecke 8. Sobald dies geschehen ist, kann der Eingabeelevator 4 wieder einen neuen Vollstapel 26 bilden, indem die mit Warenstücken 10 besetzten Trägerplatten 11 gemäß Pfeil 27 im Eingabeelevator 4 nach aufwärts getaktet werden. Die Höhe des Vollstapels 26 ist einstellbar. Um nach dem Beginn des Befüllens eines Speichers sehr schnell eine Ausgabebereitschaft für Warenstücke 10 zu erreichen, ist eine kleine Stapelhöhe einzustellen. So kann es sinnvoll sein, zu Beginn des Befüllens eines Speichers zunächst nur Vollstapel 26 aus nur z. B. zehn befüllten Trägerplatten 11 übereinander zu bilden und die Stapelhöhe dann nachfolgend zu vergrößern, wenn die variable Aufnahmekapazität erhöht werden soll.

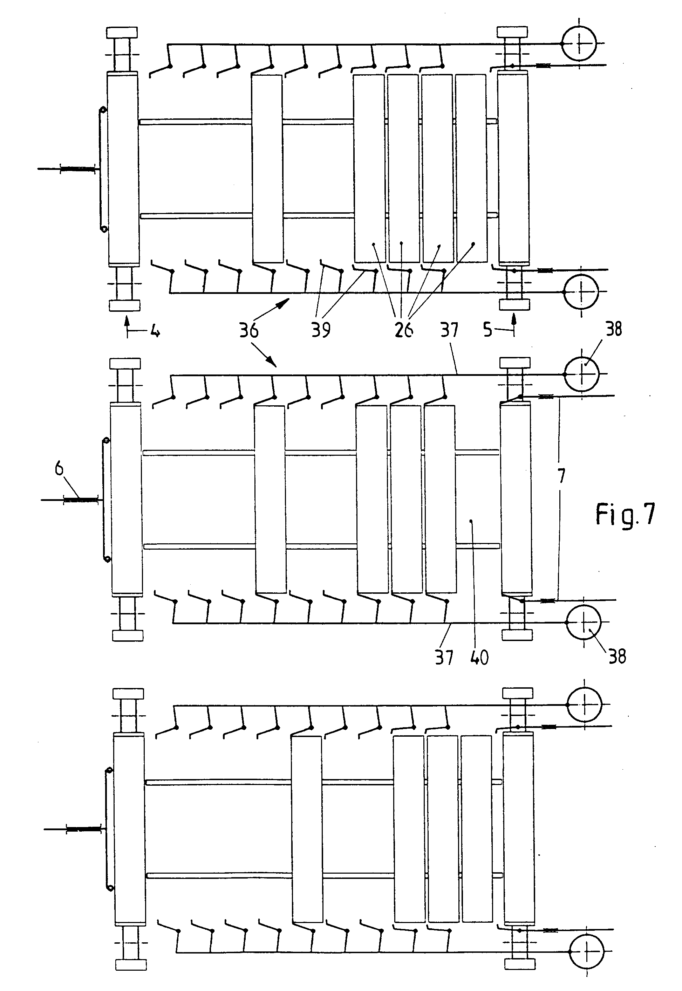

Die einzelnen Vollstapel 26 werden nun auf der Förderstrecke 8 stapelschweise schrittweise in Längsrichtung des Speichers 1 bewegt, wie dies im Einzelnen in den Figuren 6 und 7 dargestellt ist. Diese Bewegung erfolgt so, daß die Vollstapel 26 vor dem Ausgabeelevator 5 aufgestaut werden, wenn der Ausgabeelevator 5 noch ganz oder teilweise mit Trägerplatten besetzt ist. Ist jedoch der Ausgabeelevator 5 leer, dann wird der erste Vollstapel 26 vor der Staustelle sofort in den Ausgabeelevator 5 überführt und die nachfolgenden Vollstapel 26 an der Staustelle aufgestaut. Im Ausgabeelevator 5 wandern die mit den Warenstücken 10 besetzten Trägerplatten 11 taktweise, d. h. schrittweise nach unten gemäß Pfeil 28, bis die erste Trägerplatte in den Bereich der Ausgabestation 3 gelangt und die auf ihr befindlichen Warenstücke 10 mit Hilfe des Ausgabeschiebers 15 auf den Förderer 16 geschoben werden. Dies geschieht selbstverständlich nur, wenn eine Ausgabe von Warenstücken 10 aus dem Speicher erfolgen soll. Die leeren Trägerplatten 11 wandern auf dem Ausgabeelevator 5 weiter nach unten und werden taktweise einzelnen auf den Horizontalförderer 18 abgelegt und von dessen Mitnehmern 21 mitgenommen. Werden Warenstücke 10 aus dem Speicher 1 entnommen, ohne daß gleichzeitig andere Warenstücke 10 in den Speicher eingeführt werden, dann stapelt der Heber 20 die anfallenden leeren Trägerplatten 11 zu Leerstapeln 22, die auf die Gleitschienen 24 geschoben werden. Werden andererseits Warenstücke 10 in den Speicher eingeführt, ohne daß gleichzeitig Warenstücke aus dem Speicher entnommen werden, dann arbeitet der Heber 20 in umgekehrter Richtung und legt jeweils die unterste Trägerplatte 11 aus einem Leerstapel 22 auf den Zugabeförderer 18 auf, von wo sie in den Bereich des Horizontalförderers 19 gelangen, so daß dann der Kreislauf geschlossen ist.

Der Speicher 1 weist eine sehr geringe Baugröße auf. Zur Verdeutlichung ist eine Fabrikhalle mit einer Raumhöhe von etwa 5 m durch einen Fußboden 29 und eine Decke 30 angedeutet, woraus erkennbar wird, daß der Speicher 1 etwa eine Höhe von 3 m aufweisen kann, so daß er auch für niedrigere Raumhöhen benutzt werden kann. Der Speicher 1 kann in Serie erstellt werden. Er muß nicht mehr jedem einzelnen Produkt angepaßt werden. Er weist einen sehr hohen Anteil variabler Speicherkapazität auf kleinstem Raum auf. Die Trägerplatten 11 werden nur rein horizontal und rein vertikal bewegt, und zwar mit vergleichsweise geringen Geschwindigkeiten, so daß die Warenstücke 10 von den Trägerplatten 11 nicht abrutschen können. Die schnellste Geschwindigkeit ist die Taktgeschwindigkeit des Eingabeelevators 4 und des Ausgabeelevators 5. Hierbei wirken ohnehin keine Querkräfte auf die Warenstücke 10 ein. Im Bereich der Speicherstrecke 8 kann eine sehr viel niedrigere Geschwindigkeit angewendet werden, da hier nur gesamte Vollstapel 26 bewegt werden.

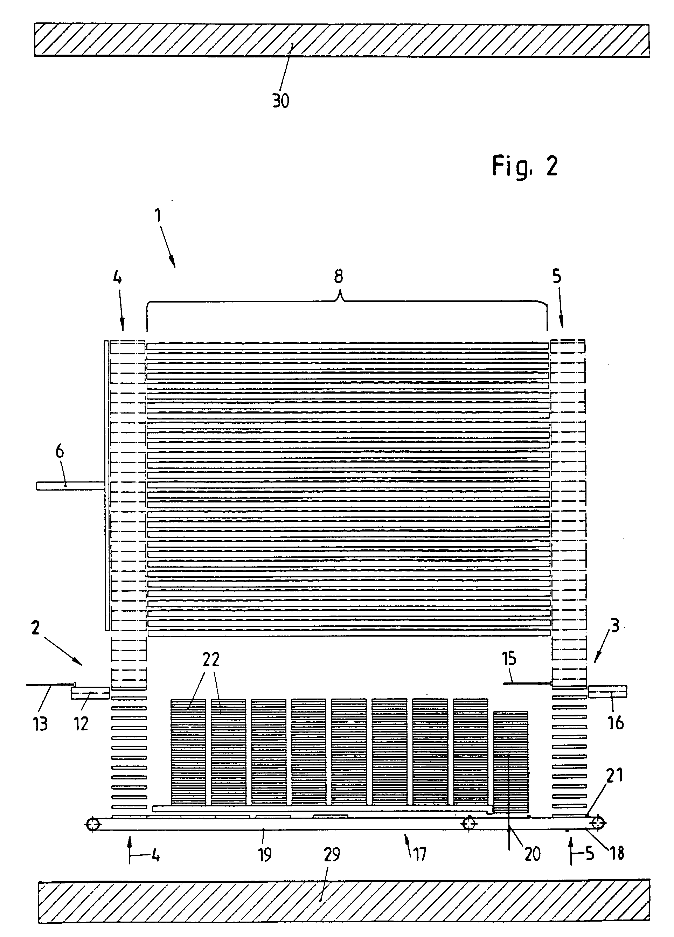

Figur 2 zeigt einen vollkommen leeren Speicher 1. Im oberen Teil befinden sich weder Trägerplatten 11 noch Warenstücke 11. Die Trägerplatten 11 sind in Leerstapeln 22 im unteren Teil abgestellt. Es ist erkennbar, daß solche Leerstapel 22 sehr einfach entnommen, gereinigt und zurückgestellt werden können. Dies ist auch während des Betriebs möglich. An der Eingabestation 2 stehen von unten leere Trägerplatten 11 an, so daß der Speicher aufnahmebereit ist.

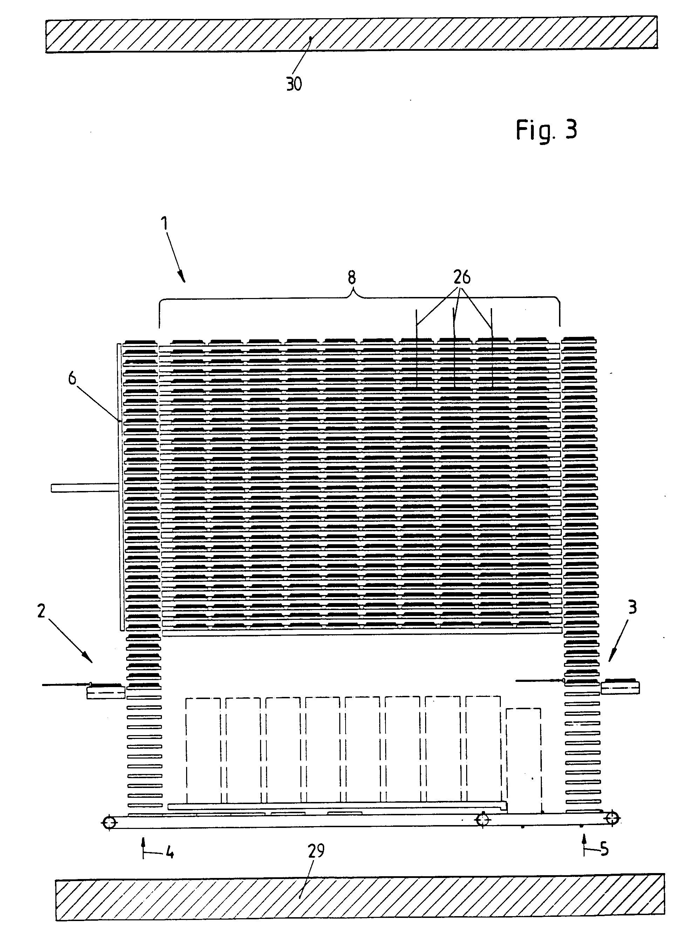

Figur 3 zeigt einen maximal befüllten Speicher 1. Die Standplätze für die Leerstapel 22 im unteren Trum sind strichpunktiert angedeutet. Die gesamte Speicherstecke 8 ist mit Vollstapeln 26 ausgefüllt. Zusätzlich sind noch der Eingabeelevator 4 und der Ausgabeelevator 5 voll besetzt. Ein solcher Speicher kann weitere Warenstücke 10 nur dann aufnehmen, wenn zuvor mindestens die Warenstücke 10 von dreißig Trägerplatten 11 aus dem Ausgabeelevator 5 mit Hilfe der Ausgabestation 3 entnommen worden sind. Dann können die Vollstapel 26 nachrücken, so daß der Eingabeelevator 4 wieder aufnahmebereit wird.

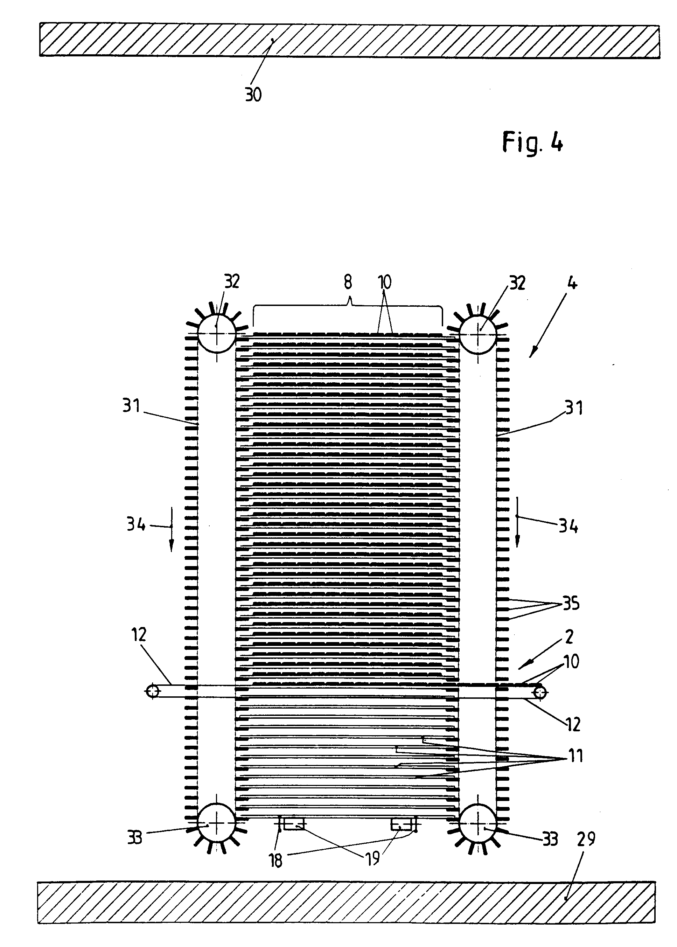

Figur 4 zeigt eine stirnseitige Ansicht des Speichers, und zwar eine Draufsicht auf den Eingabeelevator 4. Wesentliche Bestandteile des Eingabeelevators 4 sind zwei Endlosbänder 31 rechts und links, die über Umlenkräder 32, 33 in Richtung der Pfeile 34 angetrieben werden und mit Mitnehmern 35 besetzt sind, mit denen die einzelnen Trägerplatten 11 schritt- bzw. taktweise ergriffen und aufgenommen werden können. Die leeren Trägerplatten 11 werden dabei von dem Zugabeförderer 19 abgenommen und wandern im Bereich der Förderstrecke 8 taktweise nach oben. Im Bereich der Eingabestation 2 erstreckt sich das Förderband 12 über die gesamte Stirnseite des Speichers, so daß die Warenstücke 10 reihenweise auf die Trägerplatten 11 aufgeschoben werden können. Bei dem hier gezeigten Ausführungsbeispiel werden dreizehn Schokoladetafeln auf einmal auf eine Trägerplatte 11 aufgeschoben. Statt den Eingabeelevator 4 nach oben und den Ausgabeelevator 5 nach unten arbeiten zu lassen, ist natürlich auch die Umkehrung möglich. Die Speicherstrecke 8 ist dann am Speicher 1 unten angeordnet, während das Leertrum oben angeordnet ist.

Figur 5 verdeutlicht die Verhältnisse im unteren Trum. Es sind hier zwei Halbschnitte gezeigt, die eine Draufsicht in verschieden hohen Ebenen ergeben. Der obere Halbschnitt zeigt die Leerstapel 22 zur Hälfte, die auf die Gleitschienen 24 aufgeschoben werden. Es ist die Fördereinrichtung 23 erkennbar, die natürlich auf der anderen Seite (nicht dargestellt) durch symmetrische Teile komplettiert ist, so daß die Leerstapel 22 entsprechend Pfeil 25 weitergerückt werden können. Im unteren Halbschnitt ist im wesentlichen eine Draufsicht auf den Zugabeförderer 19 gezeigt. Es ist hier erkennbar, wie die leeren Trägerplatten 11 vor dem Eingabeelevator 4 aufgestaut werden, so daß die vorderste, im Bereich des Eingabeelevators 4 befindliche Trägerplatte, abgenommen werden kann, wenn der Eingabeelevator 4 eine Taktbewegung ausführt. Es versteht sich, daß der Zugabeförderer 19 dann stillgesetzt werden, wenn eine einstellbare Anzahl von Trägerplatten 11, z. B. vier Stück, aneinanderliegend aufgestaut sind.

Die Figuren 6 und 7 zeigen schematisierte Draufsichten auf den Speicher und dienen insbesondere der Verdeutlichung der Arbeitsweise im Bereich der Speicherstrecke 8. Die erste Darstellung in Figur 6 zeigt die Verhältnisse, wie sie auch in Figur 1 dargestellt sind. In dem Eingabeelevator 4 und dem Ausgabeelevator 5 befinden sich jeweils komplette Vollstapel 26. Zwei weitere Vollstapel 26 sind benachbart vor dem Ausgabeelevator 5 aufgestaut. Drei weitere Vollstapel 26 befinden sich auf Abstand am Anfang bzw. der Mitte der Speicherstrecke 8. Eine Fördereinrichtung 36, die seitlich rechts und links an den Vollstapeln 26 der Trägerplatten 11 angreift, ist stark schematisiert angedeutet. Eine Antriebsstange 37 wird mittels eines Exzenters 38 kontinuierlich hin- und hergehend angetrieben. Jede Antriebsstange 37 ist mit Mitnehmerarmen 39 besetzt, die um vertikale Achsen schwenkbar angeordnet sind und mit Hilfe eines nicht dargestellten einzelnen Zusatzantriebs, z. B. eines Pneumatikzylinders, jeweils aus einer Ruhestellung in eine Mitnahmestellung schwenkbar sind. In der Ruhestellung wird ein Vollstapel 26 nicht hintergriffen, während in der Mitnahmestellung dies der Fall ist. Die Mitnehmerarme 39 werden nun immer so gesteuert, daß die einem Freiplatz zugeordneten Mitnehmerarme 39 und sämtliche nachfolgend, bis zum Eingabeelevator 4 nach rückwärts vorgesehenen Mitnehmerarme in die Mitnahmeposition verschwenkt werden und dann ein Takt der Fördereinrichtung 36 ausgeführt wird. Die oberste Darstellung in Figur 6 zeigt zwei vor der Staustelle aufgestaute Vollstapel 26 nacheinander. Dann hat sich der Freiplatz 40 gebildet. Dann folgt in Richtung auf den Eingabeelevator 4 wiederum ein Vollstapel 26 sowie weitere Freiplätze usw. Man erkennt, daß die Fördereinrichtung 36 in der Stellung dargestellt ist, in der ihre Elemente dem Eingabeelevator 4 am nächsten kommen. Sämtliche Mitnehmerarme 39 mit Ausnahme des ersten Paares sind in die Mitnahmestellung eingeschwenkt, also insbesondere die Mitnehmerarme 39, die in dieser Stellung dem Freiplatz 40 zugeordnet sind. Wenn dann die Fördereinrichtung 36 einen Takt ausführt, wird die mittlere Stellung in Figur 6 erreicht, so daß nunmehr drei Vollstapel 26 vor dem Ausgabeelevator 5 aufgestaut sind und sich der Freiplatz 40 um einen Platz verschoben hat. Demzufolge befinden sich nunmehr zwei Paare von Mitnehmerarmen 39 in der Ruhestellung. Der Ausgabeförderer 7 wird während dieser Bewegungen nicht angetrieben, da der Ausgabeelevator 5 (Figur 1) noch mit Trägerplatten 11 und Warenstücken 10 besetzt ist. Es wird dann ein weiterer Takt mit der Fördereinrichtung 36 ausgeführt, so daß die unterste Stellung gemäß Figur 6 erreicht wird. Dabei sei vorausgesetzt, daß sich im Eingabeelevator 4 noch kein vollständiger Stapel 26 gebildet hat, so daß auch der Eingabeförderer 6 noch nicht in Tätigkeit gesetzt wurde.

Die Verhältnisse nach einem weiteren Takt der Fördereinrichtung 36 zeigt die erste Darstellung in Figur 7. Es sind nunmehr vier Vollstapel 26 aufgestaut. Es sei nun angenommen, daß durch eine zwischenzeitliche Entnahme von Warenstücken 10 des Ausgabeelevators 5 jedenfalls über eine dem Vollstapel 26 entsprechende Höhe entleert wurde. Dabei ist darauf zu achten, daß im Speicher in vertikaler Richtung im Bereich des Eingabeelevatoren 4 und des Ausgabeelevators 5 niemals Lücken entstehen. Die sechs unterhalb der Speicherstrecke 8 befindlichen Trägerplatten im Ausgabeelevator 5 sind noch mit Warenstücken befüllt. Damit aber ist der Ausgabeelevator 5 aufnahmebereit für einen weiteren Vollstapel 26. Es wird jetzt der Ausgabeförderer 7 in Tätigkeit gesetzt, wie dies die mittlere Darstellung in Figur 7 zeigt. Der erste aufgestaute Vollstapel aus der Gruppe von vier Vollstapeln wird in den Ausgabeelevator 5 vorgerückt. Damit entsteht der erste, in Richtung auf den Eingabeelevator 4 sich bildende Freiplatz 40 unmittelbar vor der Staustelle, so daß nunmehr sämtliche Mitnehmerarme 39 in die Mitnahmeposition eingerückt werden, so daß beim nächsten Takt der Fördereinrichtung 36 die drei aneinander befindlichen Vollstapel 26 und der beabstandete Vollstapel 26 gemeinsam um einen Takt in der Speicherstrecke 8 vorbewegt werden. Zur Vereinfachung sei dabei immer noch angenommen, daß keine weiteren Warenstücke in den Speicher gleichzeitig eingeführt werden, also der Vollstapel 26 im Eingabeelevator 4 noch nicht komplett ist.

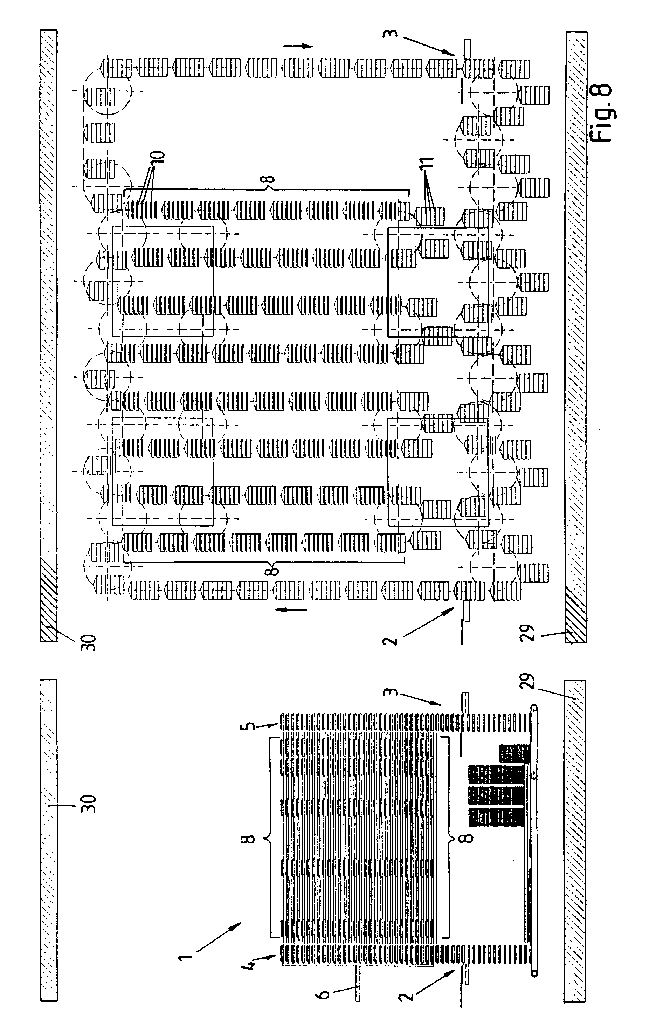

Figur 8 zeigt einen Größenvergleich zwischen dem neuen Speicher (links) und dem Speicher nach dem Stand der Technik (rechts). Es sind zwei Speicher dargestellt, die in ihrer variablen Aufnahmekapazität etwa übereinstimmen. Beim Speicher nach dem Stand der Technik mit den Gondeln und den darauf befindlichen Trägerplatten sind nur in dem Teil des Speichers Warenstücke eingezeichnet, der der Speicherstrecke mit variabler Aufnahmekapazität entspricht. Man erkennt durch den Größenvergleich, daß der Speicher nach dem Stand der Technik wesentlich länger und auch wesentlich höher baut, um gleiche variable Aufnahmekapazität zur Verfügung zu stellen. Durch die Umlenkung der Gondeln muß der Gondelsprung verwirklicht werden und die Trägerplatten an den Gondeln können immer nur relativ kleine Stapel darstellen. Im vorliegenden Fall weist jede Gondel sechs Trägerplatten mit Warenstücken auf.

Aus diesem Größenvergleich ist erkennbar, daß für den Anmeldungsgegenstand die Möglichkeit besteht, einen Universalspeicher zu schaffen, also unabhängig von der Art und dem Format der Warenstücke. Auch die eingabeseitig und ausgabeseitig vorhandenen Bauteile können standardisiert werden. Für Speicher mit unterschiedlich großer variabler Aufnahmekapazität ist es lediglich erforderlich, die Förderstrecke 8 mehr oder weniger lang zu gestalten, während die Eingabestation mit dem Eingabeelevator 4 und dem Eingabeförderer 6 einerseits sowie die Ausgabestation mit dem Ausgabeelevator 5 und dem Ausgabeförderer 7 andererseits unverändert übernommen werden können. Sicherlich ist es möglich, bei einer Fabrikhallenhöhe von 5 m den neuen Speicher auch noch höher zu gestalten und damit die Kapazität zu vergrößern. Im allgemeinen ist dies jedoch nicht erforderlich, da die variable Aufnahmekapazität eines Speichers in Standardhöhe von 3 m für die wesentlichen Anwendungsfälle ausreicht.

## Patentansprüche

1. Speicher für Warenstücke, insbesondere reihenweise geförderte Süßwarenstücke, mit einer Eingabestation und einer Ausgabestation, die unabhängig voneinander betätigbar sind, mit einer zwischen Eingabestation und Ausgabestation angeordneten Speicherstrecke mit variabler Aufnahmekapazität und mit Trägerplatten zur Aufnahme der Warenstücke und einer Fördereinrichtung zum Transportieren der Trägerplatten in etwa kreisartiger Bewegung durch den Speicher, dadurch gekennzeichnet, daß die Trägerplatten (11) im Speicher (1) frei beweglich vorgesehen sind, daß im Bereich der Eingabestation (2) ein Eingabeelevator (4) und im Bereich der Ausgabestation (3) ein Ausgabeelevator (5) zum Bilden bzw. Abarbeiten von Vollstapeln (26) von mit Warenstücken (10) besetzten Trägerplatten (11) vorgesehen sind, daß die Speicherstrecke (8) zwischen Eingabeelevator (4) und Ausgabeelevator (5) zum gemeinsamen Fördern der Vollstapel (26) unter Staubildung vor dem der Ausgabestation (3) zugeordneten Ausgabeelevator (5) ausgebildet ist, daß zwischen dem Eingabeelevator (4) und der Speicherstrecke (8) je ein Eingabeförderer (6) und zwischen der Speicherstrecke (8) und dem Ausgabeelevator (5) ein Ausgabeförderer (7) für Vollstapel (26) vorgesehen sind, und daß separate Antriebe für den Eingabelevator (4), den Ausgabeelevator (5), den Eingabeförderer (6), den Ausgabeförderer (7) und die Speicherstrecke (8) vorgesehen sind.

2. Speicher nach Anspruch 1, dadurch gekennzeichnet, daß der Eingabeelevator (4) und der Ausgabeelevator (5) zur senkrechten Förderung der Trägerplatten (11) und die Speicherstrecke (8) zur horizontalen Förderung der Vollstapel (26) ausgebildet sind.

3. Speicher nach Anspruch 1 oder 2, dadurch gekennzeichnet, daß eine Steuer- und Überwachungseinrichtung zum voneinander abhängigen Ansteuern der separaten Antriebe vorgesehen ist.

4. Speicher nach Anspruch 1 bis 3, dadurch gekennzeichnet, daß zur Führung der Trägerplatten (11) im Vollstapel (26) im Bereich der Speicherstrecke Gleitbahnen (9) vorgesehen sind, auf denen die Trägerplatten (11) einzeln abgestützt und gemeinsam stapelweise bewegbar sind.

5. Speicher nach Anspruch 3 und 4, dadurch gekennzeichnet, daS die Anzahl der Trägerplatten (11) im Vollstapel (26) einstellbar ist.

6. Speicher nach einem oder mehreren der Ansprüche 1 bis 5, dadurch gekennzeichnet, daß zwischen Ausgabestation (3) und Eingabestation (2) eine Förder- und Speicherstrecke (17) zum Aufbauen, Konstanthalten oder Abbauen von Leerstapeln (22) von Trägerplatten (11) ohne Warenstücke (10) vorgesehen ist.

7. Speicher nach Anspruch 6, dadurch gekennzeichnet, daß die Förder- und Speicherstrecke (17) aneinander anschließend einen Horizontalförderer (18) und einen Zugabeförderer (19) aufweist, in deren Übergabebereich ein Heber (20) zum Bilden eines Leerstapels (22) von Trägerplatten (11) ohne Warenstücke (10) vorgesehen ist, und daß eine reversible Fördereinrichtung (23) für die Leerstapel (22) vorgesehen ist.

8. Speicher nach Anspruch 1, dadurch gekennzeichnet, daß der Eingabeförderer (6) und der Ausgabeförderer (7) jeweils dem Eingabeelevator (4) und dem Ausgabeelevator (5) zugeordnet sind und als die Trägerplatten (11) im Vollstapel (26) hintergreifende Ein- bzw. Ausschieber ausgebildet sind.

9. Speicher nach Anspruch 1, dadurch gekennzeichnet, daß die Fördereinrichtung (36) im Bereich der Speicherstrecke (8) die Trägerplatten (11) im Vollstapel (26) hintergreifende Mitnehmerarme (39) aufweist, die um vertikale Achsen in eine Mitnahmeposition bzw. Leerposition verschwenkbar sind und kontinuierlich schrittweise angetrieben sind.

10. Speicher nach Anspruch 9, dadurch gekennzeichnet, daß die Fördereinrichtung (36) eine Steuereinrichtung für die Mitnehmerarme (39) aufweist, die in Abhängigkeit von dem entgegen der Förderrichtung ersten Freiplatz (40) nachfolgend sämtlich in die Mitnahmeposition überführt werden.

## Claims

1. A store for individual products, in particular edible sweet goods conveyed in rows, having an input station and an output station which can be actuated independently of each other, a storage line, arranged between input and output stations, with variable receiving capacity and carrier plates for receiving the individual products as well as a conveying facility for transporting the carrier plates in a roughly circular motion through the store, **wherein** the carrier plates (11) in the store (1) are provided so that they may be moved around freely, that an input elevator (4) is provided in the area of an input station (2) and an output elevator (5) in the area of the output station (3) for building up and working through full stacks (26) of carrier plates (11) occupied with individual products (10), that the storage line (8) between input elevator (4) and output elevator (5) is designed for the joint conveyance of full stacks (26) with congestion in front of the output elevator (5) assigned to the output station (3), that in input conveyor (6) for full stacks (26) is provided between input elevator (4) and storage line (8) and an output conveyor (7) for full stacks (26) is provided between storage line (8) and output elevator (5), and that separate drives for the input elevator (4), the output elevator (5), the input conveyor (6), the output conveyor (7) and the storage line (8) are provided.

2. The store of claim 1, **wherein** the input elevator (4) and the output elevator (5) are designed for the vertical conveyance of carrier plates (11), and the storage line (8) for the horizontal conveyance of full stacks (26).

3. The store of claim 1 or 2, **wherein** a control and monitoring facility is provided for the independent control of the separate drives.

4. The store of claims 1 to 3, **wherein** slideways (9) are provided in the area of the storage line (8) for guiding the carrier plates (11) in full stacks (26), whereby the carrier plates (11) are individually supported and can be moved together in stacks on said slideways.

5. The store of claims 3 and 4, **wherein** the number of carrier plates (11) in the full stack (26) may be adjusted.

6. The store of one or several of the claims 1 to 5 **wherein** a conveying and storage path (17) for building up, maintaining or breaking down empty stacks (22) of carrier plates (11) without individual products (10) is provided between output station (3) and imput station (2).

7. The store of claim 6, **wherein** the conveying and storage path (17) has a horizontal conveyor (18) and a return conveyor (19) connected with one another in series, whereby a lifter (20) for building up an empty stack (22) of carrier plates (11) without individual products (10) is provided in the transition area of said conveyors, and that a reversible conveying facility (23) is provided for the empty stacks (22).

8. The store of claim 1, **wherein** the input conveyor (6) and the output conveyor (7) are allocated to the input elevator (4) and output elevator (5), whereby said conveyors are designed as push-in and push-out devices which engage the carrier plates (11) in the full stack (26) from behind.

9. The store of claim 1, **wherein** the conveying facility (36) in the area of the storage line (8) has carrier arms (39) which engage with the carrier plates (11) in the full stack (26) from behind, whereby said carrier arms can be pivoted about vertical axes into a carrying position or empty (idle) position and can be driven continuously in a step-wise mode.

10. The store of claim 9, **wherein** the conveying facility (36) has a control unit for the carrier arms (39) which, depending on the first free space (40) opposite the conveying facility, are subsequently all transferred into the carrying position.

## Revendications

1. Stockeur d'articles, en particulier d'articles de confiserie transportés par rangée, comportant un poste d'entrée et un poste de sortie qui peuvent être actionnés indépendamment l'un de l'autre, comportant un parcours de stockage situé entre le poste d'entrée et le poste de sortie, de capacité variable et comportant des plateaux de support destinés à recevoir les articles, et un dispositif de transport pour le transport des plateaux de support dans un mouvement à peu près circulaire à travers le stockeur, caractérisé en ce que les plateaux (11) sont librement mobiles dans le stockeur (1), en ce que dans la zone du poste d'entrée (2) sont prévus un élévateur d'entrée (4) et dans la zone du poste de sortie (3) un élévateur de sortie (5) destinés respectivement à former et à défaire des piles pleines (26) de plateaux (11) garnis d'articles (10), en ce que le parcours de stockage (8) entre l'élévateur d'entrée (4) et l'élévateur de sortie (5) est conçu pour le transport commun des piles pleines (26) avec formation d'une retenue devant l'élévateur de sortie (5) affecté au poste de sortie (3), en ce qu'entre l'élévateur d'entrée (4) et le parcours de stockage (8) il est prévu un transporteur d'entrée (6) et entre le parcours de stockage (8) et l'élévateur de sortie (5), un transporteur de sortie (7) pour des piles pleines (26), et en ce que sont prévus des entraînements séparés pour l'élévateur d'entrée (4), l'élévateur de sortie (5), le transporteur d'entrée (6), le transporteur de sortie (7) et le parcours de stockage (8).

2. Stockeur selon la revendication 1, caractérisé en ce que l'élévateur d'entrée (4) et l'élévateur de sortie (5) sont conçus pour le transport vertical des plateaux (11) et le parcours de stockage (8) pour le transport horizontal des piles pleines (26).

3. Stockeur selon la revendication 1 ou 2, caractérisé en ce qu'il est prévu un dispositif de commande et de contrôle pour commander indépendamment l'un de l'autre les entraînements séparés.

4. Stockeur selon les revendications 1 à 3, caractérisé en ce que pour le guidage des plateaux (11) dans la pile pleine (26) sont prévues, dans la zone du parcours de stockage, des glissières (9) sur lesquelles les plateaux (11) sont soutenus individuellement et déplaçables conjointement en pile.

5. Stockeur selon les revendications 3 et 4, caractérisé en ce que le nombre de plateaux (11) dans la pile pleine (26) est réglable.

6. Stockeur selon une ou plusieurs des revendications 1 à 5, caractérisé en ce qu'entre le poste de sortie (3) et le poste d'entrés (2) il est prévu un parcours de transport et de stockage (17) destiné à constituer, à maintenir constantes ou à défaire des piles vides (22) de plateaux (11) sans articles (10).

7. Stockeur selon la revendication 6, caractérisé en ce que les parcours de transport et de stockage (17) comportent l'un après l'autre un transporteur horizontal (18) et un transporteur d'alimentation (19) dans la zone de transfert desquels est prévu un élévateur (20) destiné à former une pile vide (22) de plateaux (11) sans articles (10), et en ce qu'il est prévu un dispositif de transport réversible (23) pour la pile vide (22).

8. Stockeur selon la revendication 1, caractérisé en ce que le transporteur d'entrée (6) et le transporteur de sortie (7) sont affectés respectivement à l'élévateur d'entrée (4) et à l'élévateur de sortie (5) et sont conçus à la manière respectivement de pousseurs et d'éjecteurs passant derrière les plateaux (11) dans la pile pleine (26).

9. Stockeur selon la revendication 1, caractérisé en ce que le dispositif de transport (36) comporte dans la zone du parcours de stockage (8) des bras d'entraînement (39) passant derrière les plateaux (11) dans la pile pleine (26), lesquels bras peuvent pivoter autour d'axes verticaux dans une position d'entraînement ou une position à vide et sont entraînés pas à pas en continu.

10. Stockeur selon la revendication 9, caractérisé en ce que le dispositif de transport (36) comporte un dispositif de commande pour les bras d'entraînement (39), qui passent tous successivement dans la position d'entraînement, en fonction de la première place libre (40), dans le sens contraire au sens du transport.
